# EUROPÄISCHE PATENTSCHRIFT

(11) **EP 1 883 498 B1**
(45) Veröffentlichungstag und Bekanntmachung des Hinweises auf die Patenterteilung: **09.06.2010**
(21) Anmeldenummer: 06742721.1
(22) Anmeldetag: 27.04.2006
(51) Int. Cl.: B23Q 17/20, B23H 9/00

(54) **VORRICHTUNG ZUM BEARBEITEN UND VERMESSEN VON MIT SCHNEIDEZÄHNEN VERSEHENEN WERKSTÜCKEN**
APPARATUS FOR PROCESSING AND MEASURING WORKPIECES WHICH ARE PROVIDED WITH CUTTING TEETH
DISPOSITIF D'USINAGE ET DE MESURE DE PIECES POURVUES DE DENTS COUPANTES

(30) Priorität: 29.04.2005 DE 102005020034
(43) Veröffentlichungstag der Anmeldung: 06.02.2008
(73) Patentinhaber: VOLLMER WERKE Maschinenfabrik GmbH, 88400 Biberach/Riss (DE)
(72) Erfinder: BRAND, Stefan, 88487 Mietingen-Walpertshofen (DE); BAILER, Peter, 88433 Schemmerhofen-Altheim (DE); BAILER, Norbert, 88433 Schemmerhofen-Altheim (DE); VEIL, Siegfried, 88416 Ochsenhausen (DE)
(74) Vertreter: Thum, Bernhard
(86) Internationale Anmeldenummer: PCT/EP2006/003933
(87) Internationale Veröffentlichungsnummer: WO 2006/117133

(56) Entgegenhaltungen:
- EP-A- 0 292 081
- EP-A- 1 092 495
- DE-A1- 10 144 963
- DE-A1- 19 800 034
- DE-U1- 8 713 384
- US-A- 4 562 392
- US-A- 4 899 094

## Beschreibung

Die vorliegende Erfindung betrifft eine Vorrichtung zum Bearbeiten und Vermessen von mit Schneidzähnen versehenen, insbesondere plattenförmigen oder zylindrischen, Werkstücken mit einer Maschinenbasis, einer relativ zu der Maschinenbasis verlagerbaren Bearbeitungs- und Messeinrichtung und einer relativ zu der Maschinenbasis verlagerbaren Werkstückpositioniereinrichtung, wobei die Bearbeitungs- und Messeinrichtung einen Schwenkkopf aufweist, der relativ zur Maschinenbasis um eine Schwenkachse schwenkbar verlagerbar ist, wobei an dem Schwenkkopf ein Bearbeitungswerkzeug und ein Messtaster vorgesehen sind.

Derartige Vorrichtungen sind aus dem Stand der Technik bekannt. So zeigt beispielsweise der gattungsbildende Stand der Technik gemäß WO 92/19410 eine Vorrichtung, bei der an dem Schwenkkopf in Richtung der Schwenkachse vorspringend sowohl ein Messtaster als auch eine Drahtelektrodenanordnung angeordnet sind. Diese Anordnung hat den Nachteil, dass sich Messtaster und Drahtelektrodenanordnung in bestimmten Bearbeitungssituationen störend im Wege stehen, so dass weitreichend Bewegungen um und entlang der einzelnen Bearbeitungsachsen erforderlich sind, um die jeweilige Messaufgabe bzw. Bearbeitungsaufgabe durchführen zu können.

Auch aus dem Dokument EP 1 273 392 A1 ist eine Vorrichtung bekannt, bei der an einer Bearbeitungseinrichtung sowohl ein Bearbeitungswerkzeug; nämlich eine Schleifscheibe, als auch ein Messtaster angebracht sind. Bearbeitungswerkzeug und Messtaster sind um 90° zueinander versetzt. Auch diese Anordnung birgt den Nachteil, dass sich das Bearbeitungswerkzeug und der Messtaster in bestimmten Bearbeitungssituationen störend im Wege stehen können, was die Einsatzmöglichkeiten der dort gezeigten Maschine beeinträchtigt.

Aus dem Dokument DE 198 00 034 A1 ist weiter eine Werkzeugmaschine zur Bearbeitung von Werkzeuge bekannt, die mindestens ein Maschinengestell und mindestens einen Werkzeugträger umfasst. Der Werkzeugträger ist gegenüber der Maschinenbasis um eine Drehachse verschwenkbar. An dem Werkzeugträger sind sowohl Bearbeitungswerkzeuge als auch diesen gegenüber eine Messeinrichtung angeordnet. Das Werkstück ist etwa mittig unterhalb des Werkzeugträgers angeordnet.

Dokument EP 1092 495 A1 betrifft eine Maschine zum Schleifen von Zahnrädern mit einem Maschinenständer, einem auf dem Maschinenständer linear hin und her bewegbaren Wälzschlitten, einer auf dem Wälzschlitten drehbar gelagerte Werkstückspindel, deren Drehachse zu der Unearbewegung des Wälzschlittens rechtwinklig ist sowie einer Schleifscheibe. Zum Antreiben der Werkstückspindel wie auch des Wälzschlittens und der Schleifscheibe sind Antriebseinrichtungen vorhanden. Mit dem Maschinenständer ist ein Messtaster zu einer Bewegung in zwei Richtungen verbunden, von denen die erste zur Drehachse der Werkstückspindel und zur Achse der Linearbewegung des Wälzschlittens rechtwinklig ist und die zweite Drehachse der Werkzeugspindel parallel und zur Unearbewegung des Wälzschlittens rechtwinklig ist. Wenn das auf die Werkstückspindel aufgespannte Werkstück vermessen werden soll, dann wird es mit der Schleifscheibe außer Eingriff gebracht, und der Wälzschlitten wird von der Schleifscheibe zur Bedienseite hin verfahren.

Ferner wird zum Stand der Technik auf die Dokumente US 4,809,094 A und DE 87 13 384 U1 verwiesen.

Es ist demgegenüber eine Aufgabe der vorliegenden Erfindung, eine Vorrichtung der eingangs bezeichneten Art bereitzustellen, bei der störende gegenseitige Beeinflussungen von Bearbeitungseinrichtung Messtaster weitgehend verhindert werden können.

Diese Aufgabe wird durch eine Vorrichtung mit den Merkmalen des Patentanspruchs 1 gelöst.

Durch die erfindungsgemäße Anbringung von Bearbeitungswerkzeug und Messtaster an zueinander entgegengesetzten Seiten des Schwenkkopfes lässt sich eine Vergrößerung des Einsatzspektrums der erfindungsgemäßen Vorrichtung gegenüber dem Stand der Technik erreichen. Messtaster und Bearbeitungswerkzeug stehen sich nicht mehr störend im Wege. Je nach Einsatzfall, das heißt in Abhängigkeit davon, ob ein Werkstück bearbeitet oder vermessen werden soll, wird der Schwenkkopf in eine entsprechende Schwenkstellung verlagert, so dass entweder der Messtaster oder das Bearbeitungswerkzeug in Kontakt mit dem zu bearbeitenden Werkstück gebracht werden können. Die erfindungsgemäße Anordnung erleichtert auch das Vermessen unterschiedlich ausgestalteter Werkstücke, beispielsweise das Vermessen von Schneidzähnen von rechtsschneidenden oder linksschneidenden Werkstücken. Der Messtaster und das Bearbeitungswerkzeug lassen sich durch Verschwenken um die Schwenkachse in weitgehend beliebige Winkelpositionen relativ zu dem zu bearbeitenden Werkstück bringen, was das Einsatzfeld der erfindungsgemäßen Vorrichtung weiter vergrößert.

Gemäß einer bevorzugten Ausführungsform der Erfindung ist vorgesehen, dass das Bearbeitungswerkzeug an dem Schwenkkopf um eine Antriebsachse drehantreibbar angebracht ist. Dabei kann vorgesehen sein, dass die Antriebsachse im Wesentlichen orthogonal zur Schwenkachse verläuft. Dadurch lässt sich eine kompakte Anordnung der einzelnen Antriebsvorrichtungen für das Verschwenken des Schwenkkopfes um die Schwenkachse bzw. das Antreiben des Bearbeitungswerkzeugs um die Antriebsachse erreichen.

Erfindungsgemäß kann ferner vorgesehen sein, dass das Bearbeitungswerkzeug eine Erodierelektrode, vorzugsweise eine sich drehende Erodierscheibe ist. Gleichsam kann vorgesehen sein, dass das Bearbeitungswerkzeug eine Schleifscheibe ist.

Bezüglich des Messtasters sieht eine Weiterbildung der Erfindung vor, dass dieser abgewinkelt ausgebildet ist und mit seinem freien Ende von dem Schwenkkopf vor steht. Insbesondere kann der Messtaster dabei parallel zur Schwenkachse ausgerichtet sein. In diesem Fall steht der Messtaster von dem Schwenkkopf nach unten in den freien Raum vor, so dass ein einfacher Zugang zum Werkstück gewährleistet ist und bei geringen Verfahrwegen des Schwenkkopfes ermöglicht wird. Es können jedoch auch andersartige Messtaster, beispielsweise lineare Messtaster, vorgesehen sein, die je nach Bedarf waagerecht, senkrecht oder schräg von dem Schwenkkopf vorstehen. Anstelle eines mechanischen Messtasters kann auch eine beliebige andersartige Messeinrichtung, z.B. ein optischer Messtaster (Laser), Verwendung finden, die parallel zur Schwenkachse oder beliebig anders ausgerichtet angeordnet werden kann. Dadurch lässt sich die erfindungsgemäße Vorrichtung zielgerichtet auf spezielle Bearbeitungs- und Messsituationen einrichten.

Die Erfindung wird im Folgenden anhand der beiliegenden Figuren erläutert. Es stellen dar:
- Fig. 1: eine perspektivische Übersichtsdarstellung der erfindungsgemäßen Vorrichtung
- Figuren 2 bis 6: verschiedene Bearbeitungssituationen und Messsituationen im Zusammenhang mit der erfindungsgemäßen Vorrichtung und
- Fig. 7: eine leicht abgewandelte Ausführungsform der erfindungsgemäßen Vorrichtung.

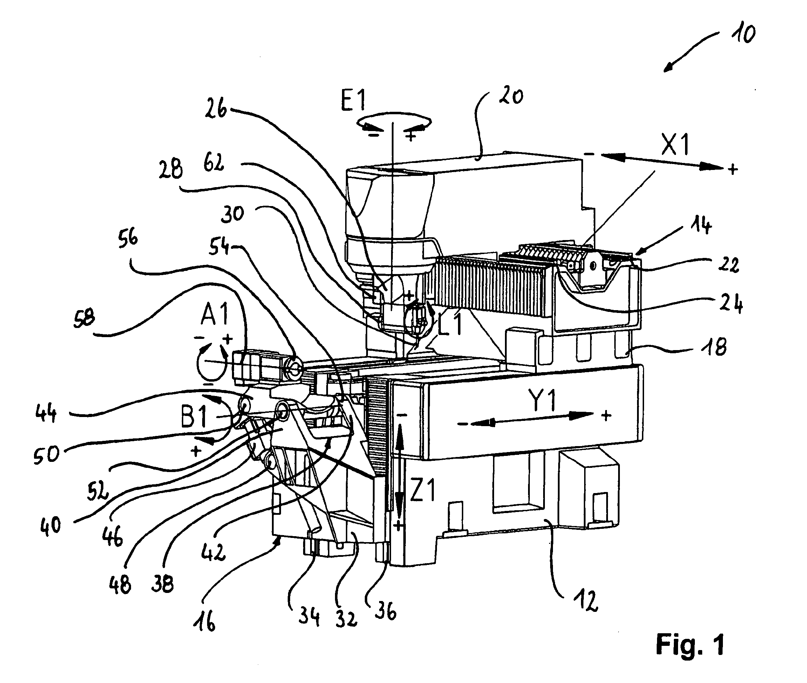

In Figur 1 ist eine Übersichtsdarstellung der erfindungsgemäßen Vorrichtung gezeigt und allgemein mit 10 bezeichnet. Diese umfasst eine Maschinenbasis 12, die fest auf einem Untergrund lagen. An der Maschinenbasis 12 sind eine Bearbeitungseinrichtung 14 sowie eine Werkstückpositioniereinrichtung 16 vorgesehen. Die Bearbeitungseinrichtung 14 umfasst eine Bearbeitungsbrücke 18, die durch eine gesteuerte Werkzeugachse entlang der Raumachse Y1 relativ zur Maschinenbasis 12 geführt verlagerbar ist. Hierzu sind an der Maschinenbasis 12 entsprechende Linearführungen sowie eine Antriebseinrichtung vorgesehen, die eine exakte Linearverlagerung des Bearbeitungsarms 20 entlang der Raumachse Y1 ermöglichen. Auf der Bearbeitungsbrücke 18 ist ein Bearbeitungsarm 20 angebracht. Der Bearbeitungsarm 20 ist auf der Bearbeitungsbrücke 18 entlang einer zur Achse Y1 orthogonalen Raumachse X1 gesteuert verlagerbar. Hierzu sind Linearführungen 22 und 24 vorgesehen, die eine exakte Linearverlagerung des Bearbeitungsarms 20 entlang der Raumachse X1 ermöglichen.

Der Bearbeitungsarm 20 ragt in freitragender Weise in Figur 1 nach links von der Bearbeitungsbrücke 18 vor. An seinem freien Ende ist an dem Bearbeitungsarm 20 eine als Schwenkkopf 26 ausgebildete Bearbeitungseinheit angebracht. Der Schwenkkopf 26 ist um eine Schwenkachse E1 verschwenkbar. Die Schwenkachse E1 ist im Wesentlichen orthogonal zu einer von den beiden Achsen X1 und Y1 aufgespannten virtuellen Ebene. Der Schwenkkopf 26 lässt sich über einen Bereich von bis zu 360° um die Schwenkachse E1 in beliebige Winkelpositionen verschwenken. An dem Schwenkkopf E1 sind eine Erodierscheibe 28 sowie ein Messtaster 30 angebracht. Der Messtaster 30 steht von dem zu der Erodierscheibe 28 entfernten Ende des Schwenkkopfs 26 nach unten vor. Diese Anordnung des Messtasters 30 ermöglicht einen guten Zugang zu einem unterhalb des Schwenkkopfs 26 angeordneten Werkstück und eine Vermessung des Werkstücks bei kurzen Verfahrenswegen. Die Erodierscheibe 28 ist über einen im Schwenkkopf 26 integrierten Drehantrieb um eine Antriebsachse L1 antreibbar. Die Erodierscheibe 28 ist bezüglich der Schwenkachse E1 an einer Seite des Schwenkkopfes 26 angebracht, wohingegen der Messtaster 30 bezüglich der Schwenkachse E1 auf der entgegengesetzten Seite des Schwenkkopfes 26 angebracht ist.

Wir Figur 1 ferner zeigt ist an der Maschinenbasis an einer vertikalen Seitenfläche die Werkstückpositioniereinrichtung angeordnet. Diese umfasst einen Lagerschlitten 32. Der Lagerschlitten 32 ist entlang einer dritten Raumachse Z1 durch entsprechende Ansteuerung linear verlagerbar. Hierzu sind an der Maschinenbasis 12 wiederum Linearführungen 34 und 36 angebracht, die über eine korrespondierende Antriebseinrichtung eine exakte Verlagerung des Lagerschlittens 32 entlang der vertikalen Raumachse Z1 ermöglichen.

Der Lagerschlitten 32 weist an seinem oberen Ende eine Lagergabel 38 mit einer ersten Lagerstrebe 40 und einer zweiten Lagerstrebe 42 auf. Zwischen den Lagerstreben 40 und 42 ist ein Freiraum vorgesehen, in dem eine Werkstückaufnahmeanordnung 44 angeordnet ist. Die Werkstückaufnahmeanordnung 44 ist um eine Kippachse B1 jeweils um etwa ± 30° verkippbar. Die Kippachse B1 verläuft im Wesentlichen orthogonal zu der dritten Raumachse Z1. Zur Realisierung einer automatisierten Kippbewegung ist ein ansteuerbares Linearstellglied 46 vorgesehen, das mit seinem einen Ende in einem Schwenklager 48 an dem Lagerschlitten 32 und mit seinem anderen Ende an einem Schwenklager 50 an der Werkstückaufnahmeanordnung 44 schwenkbar gelagert ist. Es ist noch zu ergänzen, dass die Lagerung der Werkstückaufnahmeanordnung 44 innerhalb der Lagergabel 38 über ein Loslager 52 und ein Festlager 54 realisiert ist.

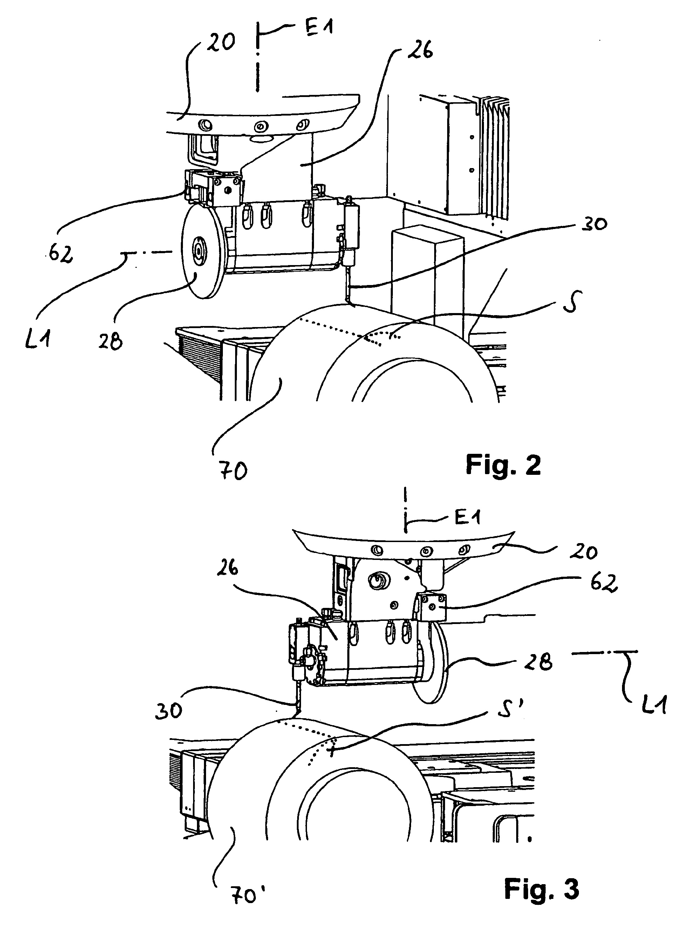

An der Werkstückaufnahmeanordnung 44 ist eine drehantreibbare Werkstückaufnahmespindel 56 vorgesehen. Ein hierzu angebrachter Drehantrieb 58 ermöglicht eine Drehung eines zu bearbeitenden scheibenförmigen Werkstücks, beispielsweise eines durch Erosionsbearbeitung zu schärfenden Kreissägeblattes 70 (siehe Fig. 2), um eine Werkstückdrehachse A1. Die Werkstückdrehachse A1 verläuft im Wesentlichen orthogonal zu der Kippachse B1.

Figur 1 zeigt ferner ein Kühlflüssigkeitssystem 62, das in fester räumlicher Zuordnung zu der Erodierscheibe 28 an dem Schwenkkopf 26 angeordnet ist. Dies bedeutet, dass die Erodierscheibe unabhängig von Schwerkrafteinflüssen in jeder Stellung des Schwenkkopfes über das Kühlflüssigkeitssystem 62 stets mit einem im Wesentlichen konstant fließenden Kühlflüssigkeitsstrahl angeströmt werden kann. Die Bewegungen des Schwenkkopfes durch Verlagerung entlang der Raumachsen Y1 und X1 sowie durch Verschwenken um die Schwenkachse E1 gewährleisten eine reproduzierbare und schwerkraftunabhängige Anströmung der Erodierscheibe 28 mit Kühlflüssigkeit, so dass im Bereich der Erodierscheibe eine laminare Kühlftüssigkeitsströmung erreicht werden kann.

Die erfindungsgemäße Vorrichtung ermöglicht die Durchführung verschiedenartiger Mess- und Bearbeitungsaufgaben, die im Folgenden anhand der Figuren 2 bis 6 unter ständiger Bezugnahme auf die Übersichtsdarstellung gemäß Figur 1 diskutiert werden sollen.

Figuren 2 und 3 zeigen jeweils einen Einsatzfall der erfindungsgemäßen Vorrichtung 10 zum Vermessen eines zylindrischen Werkstücks, beispielsweise eines Schaftfräsers 70 (siehe Fig.2) bzw. 70' (siehe Fig.3). Der Unterschied zwischen den Schaftfräsem 70 und 70' besteht darin, dass der Schaftfräser 70 rechtsschneidend ist, das heißt mit Schneidzähnen S gemäß Figur 2 ausgeführt ist. Hingegen ist der in Figur 3 schematisch dargestellte Schaftfräser 70' linksschneidend, das heißt mit Schneidzähnen S' ausgebildet, die in entgegengesetzter Richtung zu den Schneidzähnen S aus Figur 2 ausgerichtet sind.

In Figuren 2 und 3 ist erkennbar, dass durch die erfindungsgemäße Anordnung von Messtaster 30 und Bearbeitungswerkzeug 28 an entgegengesetzten Seiten des Schwenkkopfes 26 der Messtaster 30 in eine für das Vermessen des Werkstücks 70 bzw. 70' jeweils geeignete Position verschwenkt werden kann. Dadurch lassen sich ohne Weiteres Messaufgaben an dem Werkstück 70 bzw. 70' mit unterschiedlichsten Orientierungen des Messtaster 30 durchführen.

Figur 2 zeigt beispielsweise eine Messsituation, bei der das als rechtsschneidender Schaftfräser ausgebildete Werkstück 70 in seiner Zwölf-Uhr-Position, das heißt in seinem vertikal am höchsten gelegenen Bereich, mittels des Messtasters 30 vermessen wird. Demgegenüber wird in Figur 3 das als linksschneidender Schaftfräser ausgebildete Werkstück 70' mit dem von dem Schwenkkopf 26 nach unten vorspringenden Messtaster 30 vermessen, wobei der Schwenkkopf 26 um die Achse E1 über einen Winkel von 180° verschwenkt wurde.

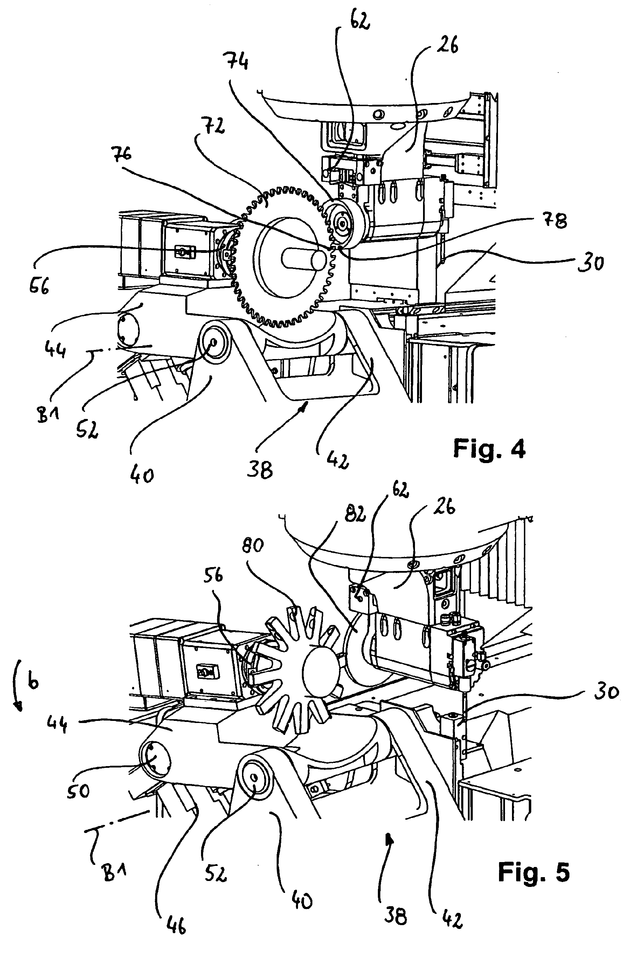

Fig. 4 zeigt eine Bearbeitungssituationen, bei der ein Kreissägeblatt 72 mit einer rotierenden topfförmigen Erodierscheibe 74 bearbeitet wird, die an dem Schwenkkopf 26 angebracht ist. Die Bearbeitung erfolgt in einem radial äußeren Winkelbereich 76 des Kreissägeblattes 72, der -- aufgrund seiner Lage korrespondierend zu einer entsprechenden Position auf einem Ziffernblatt einer Uhr -- als Drei-Uhr-Position bezeichnet wird. Die Erodierscheibe 74 kommt mit ihrer Stirnseite mit dem Kreissägeblatt 72 in einem radialen Winkelbereich 78 in Kontakt, der -- aufgrund seiner Lage korrespondierend zu einer entsprechenden Position auf einem Ziffernblatt einer Uhr -- als Sechs-Uhr-Position bezeichnet wird.

Aufgrund der erfindungsgemäßen Ausgestaltung der Vorrichtung 10 ist es möglich, den augenblicklich in dem Winkelbereich 76 befindlichen Schneidzahn des Kreissägeblattes 72 durch geeignetes Verlagern des Schwenkkopfes 26 entlang der Raumachsen X1 und Y1 und durch Verschwenken um die Schwenkachse E1 über seinen gesamten äußeren Stirn- und Seitenflächenbereich zu bearbeiten. Dabei kann das Kreissägeblatt 72 in der in Fig. 4 gezeigten Stellung verharren. Gleichermaßen tritt die Erodierscheibe 74 mit dem im Winkelbereich 76 liegenden, zu bearbeitenden Schneidzahn stets nur in dem Winkelbereich 78 der Erodierscheibe 74 in Kontakt, was zu qualitativ hochwertigen Bearbeitungsergebnissen führt. Dies ist gewährleistet durch die erfindungsgemäße Verteilung der einzelnen Bearbeitungsachsen auf die Bearbeitungseinrichtung 14 einerseits und die Werkstückpositioniereinrichtung 16 andererseits. Ferner sorgt die erfindungsgemäße Anordnung des Messtasters 30 an dem von der Erodierscheibe 74 abgewandte Ende des Schwenkkopfes 26 dafür, dass der Messtaster 30 bei einer derartigen Bearbeitung nicht störend mit einer anderen Maschinenkomponente in Wechselwirkung tritt.

Es sei angemerkt, dass bei der Darstellung gemäß Figur 4 keine Verkippung um die Kippachse B1 erfolgt.

Fig. 5 zeigt eine von der Bearbeitungssituation gemäß Figur 4 abweichende Bearbeitungssituation. Bei der Bearbeitungssituation gemäß Figur 5 wird ein so genannter Abplattfräser 80 mit einer scheibenförmigen Erodierscheibe 82 bearbeitet. Die Besonderheit des Abplattfräsers 80 liegt in seiner geneigten Stirnfläche, die zur Bearbeitung in der in Fig. 5 gezeigten Stellung eine Verkippung der Werkstückaufnahmeanordnung 44 um die Kippachse B1 erfordert. Dies ist durch den Pfeil b in Fig. 5 angedeutet. Man erkennt auch, dass zwar der Abplattfräser 80 ebenso wie das Kreissägeblatt 72 in Fig. 4 in seiner Drei-Uhr-Position bearbeitet wird, dass die Erodierscheibe 82 den Abplattfräser 80 jedoch in ihrer Drei-Uhr-Position mit ihrer Umfangsfläche kontaktiert.

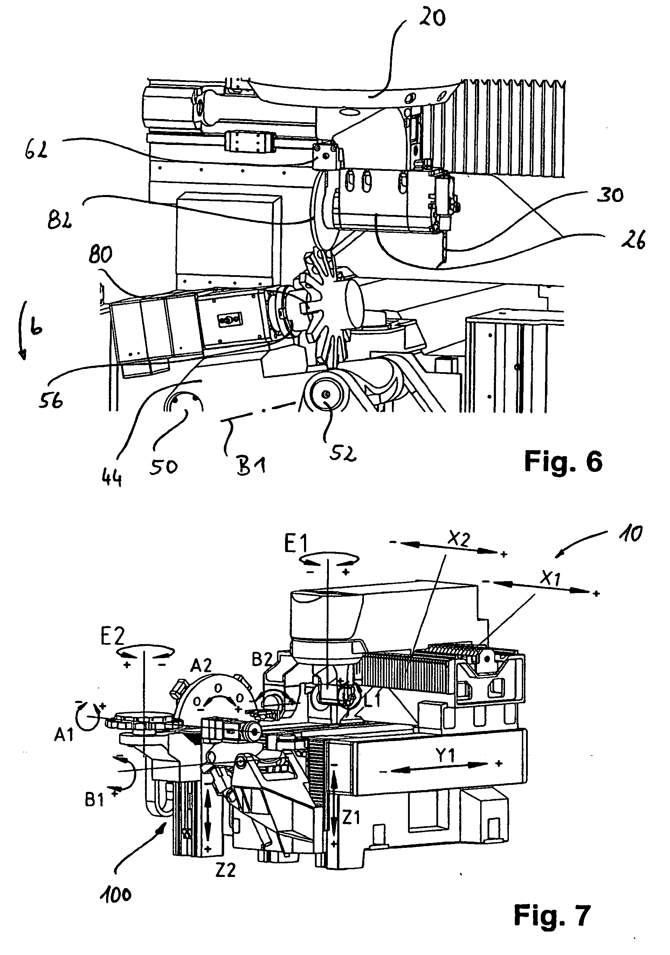

Figur 6 zeigt eine Bearbeitungssituation, bei der der Abplattfräser 80 gemäß Figur 5 in seiner Zwölf-Uhr-Position bearbeitet wird. Die Erodierscheibe 82 tritt im Bereich ihrer Sechs-Uhr-Position mit ihrer Stirnseite mit dem Abplattfräser 80 in Kontakt. Auch bei dieser Bearbeitungssituation ist der Abplattfräser 80 durch Verschwenken der Werkstückaufnahmeanordnung 44 um die Schwenkachse B1 entsprechend Pfeil b schräg gestellt.

Es versteht sich, dass die Darstellungen gemäß Figuren 2 bis 6 lediglich einen Überblick darüber geben, dass mit der erfindungsgemäßen Vorrichtung 10 eine Vielzahl von Bearbeitungsaufgaben und Messaufgaben an Werkstücken unterschiedlichster Geometrie und unterschiedlichsten Verwendungszweck ausgeführt werden können. Die erfindungsgemäße Anordnung der Bearbeitungs- und der Drehachsen bzw. Schwenkachsen sowie die erfindungsgemäße Anordnung von Erodierscheibe und Messtaster an dem Schwenkkopf 26 hat den Vorteil, dass das jeweils zu bearbeitende Werkstück in jedem Fall über einen Winkelbereich von seiner Drei-Uhr Position über seine Zwölf-Uhr-Position bis zu seiner Neun-Uhr Position auf beiden Stirnseiten und an seiner Umfangseite zugänglich ist, und dass eine Bearbeitung mit einer Erodlerscheibe derart erfolgen kann, dass die Erodierscheibe stirnseitig sowie mit ihrer Umfangsfläche das zu bearbeitende Werkstück in einem Winkelbereich zwischen ihrer Drei-Uhr Position über ihre Sechs-Uhr-Position bis zu ihrer Neun-Uhr Position kontaktieren kann. Zusätzlich sei auf die Möglichkeit zur Verkippung des zu bearbeitenden Werkstücks um die Kippachse B1 verwiesen, was weitere Bearbeitungsmöglichkeiten eröffnet, wie in Figuren 5 und 6 gezeigt.

Mit anderen Worten sind der Schwenkkopf und das Werkstück relativ zueinander derart verlagerbar, dass das Werkstück in seinem Umfangsbereich ausgehend von dem als Zwölf-Uhr-Position bezeichneten Scheitelpunkt beidseits der Scheitelpunkts in einem Winkelbereich zwischen der Drei-Uhr-Position und der Neun-Uhr-Position zur Bearbeitung mit dem Bearbeitungswerkzeug oder zum Vermessen mit den Messtaster kontaktierbar ist. Dadurch ergeben sich äußerst flexible Einsatzmöglichkeiten, die eine Bearbeitung und Vermessung einer Vielzahl von Werkstücken unterschiedlicher Geometrie zulassen.

Ein weiterer wesentlicher Aspekt der Erfindung liegt darin, dass das Kühlflüssigkeitssystem 62 in fester räumlicher Zuordnung zu der jeweils verwendeten Erodierscheibe 74 bzw. 82 liegt. Dadurch kann gewährleistet werden, dass die Erodierscheibe 74 bzw. 82 stets mit einem hinsichtlich Anströmwinkel und Anströmstelle im Wesentlichen konstant bleibenden Kühlflüssigkeitsstrom angeströmt werden kann, so dass für ein qualitativ hochwertiges Erodierergebnis unbedingt zu vermeidende Luftblasen an der Erodierstelle zuverlässig unterbunden werden können. Erfindungsgemäß lässt sich an der Erodierstelle ohne größeren Aufwand stets ein reproduzierbarer laminarer Kühlflüssigkeitsstrom einstellen. In diesem Zusammenhang ist nämlich zu erwähnen, dass eine Verkippung des Schwenkkopfes, wie sie beispielsweise aus dem Stand der Technik bekannt ist, zu schwerkraftbedingten Veränderungen hinsichtlich Anströmwinkel und Anströmstelle führt und somit das Erreichen eines reproduzierbaren laminaren Kühlflüssigkeitsstroms zumindest erschwert.

Figur 7 zeigt nun die Anordnung gemäß Figur 1, wobei zusätzlich ein Werkstück- und Werkzeug-Beschickungssystem 100 vorgesehen ist. Dieses umfasst eine Reihe von weiteren Verlagerungsachsen und Schwenkachsen, die allesamt mit der Ziffer "2" versehen sind. Die Funktionsweise der erfindungsgemäßen Vorrichtung 10 gemäß vorstehender Beschreibung ändert sich jedoch nicht.

## Patentansprüche

1. Vorrichtung (10) zum Bearbeiten und Vermessen von mit Schneidzähnen (S) versehenen, insbesondere plattenförmigen oder zylindrischen Werkstücken, mit
- einer Maschinenbasis (12),
- einer relativ zu der Maschinenbasis (12) verlagerbaren Bearbeitungs- und Messeinrichtung (14) und
- einer relativ zu der Maschinenbasis (12) verlagerbaren Werkstückpositioniereinrichtung (16),
wobei die Bearbeitungs- und Messeinrichtung (14) einen Schwenkkopf (26) aufweist, der relativ zur Maschinenbasis (12) um eine Schwenkachse (E1) schwenkbar verlagerbar ist, wobei an dem Schwenkkopf (26) ein Bearbeitungswerkzeug (28) und ein Messtaster (30) vorgesehen sind,
**dadurch gekennzeichnet, dass** das Bearbeitungswerkzeug (28) von einer Seite des Schwenkkopfes (26) vorsteht, dass der Messtaster (30) von der bezüglich der Schwenkachse (E1) entgegengesetzten Seite des Schwenkkopfes (26) vorsteht und der Schwenkkopf (26) entlang einer ersten Raumachse (Y1), entlang einer zur ersten Achse orthogonalen zweiten Raumachse (X1) und entlang einer dritten vertikalen Raumachse (Z1) derart relativ zu dem Werkstück verlagerbar ist, dass das Werkstück ausgehend von einem als Zwölf-Uhr-Position bezeichneten Scheitelpunkt beidseits des Scheitelpunktes in einem Winkelbereich zwischen einer Drei-Uhr-Position und einer Neun-Uhr-Position zur Bearbeitung mit dem Bearbeitungswerkzeug (28) oder zum Vermessen mit dem Messtaster (30) kontaktierbar ist.

2. Vorrichtung (10) nach Anspruch 1,
**dadurch gekennzeichnet, dass** das Bearbeitungswerkzeug (28) an dem Schwenkkopf (26) um eine Antriebsachse (L1) drehantreibbar angebracht ist.

3. Vorrichtung (10) nach Anspruch 2,
**dadurch gekennzeichnet, dass** die Antriebsachse (L1) im Wesentlichen orthogonal zur Schwenkachse (E1) verläuft.

4. Vorrichtung (10) nach einem der vorangehenden Ansprüche,
**dadurch gekennzeichnet, dass** das Bearbeitungswerkzeug eine Erodierelektrode (28) ist.

5. Vorrichtung (10) nach Anspruch 2 oder 3,
**dadurch gekennzeichnet, dass** das Bearbeitungswerkzeug eine Schleifscheibe ist.

6. Vorrichtung (10) nach einem der vorangehenden Ansprüche,
**dadurch gekennzeichnet, dass** der Messtaster (30) abgewinkelt ausgebildet ist und mit seinem freien Ende von dem Schwenkkopf (26) vorsteht.

## Claims

1. Apparatus (10) for processing and measuring workpieces, in particular plate-shaped or cylindrical workpieces, which are provided with cutting teeth (S), with
- a machine base (12),
- a processing and measuring device (14) which can be moved relative to the machine base (12), and
- a workpiece positioning device (16) which can be moved relative to the machine base (12),
wherein the processing and measuring device (14) has a pivoting head (26) which can be moved relative to the machine base (12) such that it can pivot about a pivot axis (E1), wherein a processing tool (28) and a measuring probe (30) are provided on the pivoting head (26),
**characterised in that** the processing tool (28) projects from one side of the pivoting head (26), and that the measuring probe (30) projects from the side of the pivoting head (26) which is opposite with respect to the pivot axis (E1), and that the pivoting head (26) can be moved relative to the workpiece such that the workpiece can be contacted starting from a vertex, called the twelve o'clock position, on both sides of the vertex in an angular region between a three o'clock position and a nine o'clock position for processing with the processing tool (28) or for measuring with the measuring probe (30).

2. Apparatus (10) according to Claim 1,
**characterised in that** the processing tool (28) is attached to the pivoting head (26) so that it can be rotatably driven about a drive axis (L1).

3. Apparatus (10) according to Claim 2,
**characterised in that** the drive axis (L1) extends substantially orthogonally to the pivot axis. (E1).

4. Apparatus (10) according to any one of the preceding Claims,
**characterised in that** the processing tool is an eroding electrode (28).

5. Apparatus (10) according to Claim 2 or 3,
**characterised in that** the processing tool is a grinding disc.

6. Apparatus (10) according to any one of the preceding Claims,
**characterised in that** the measuring probe (30) is of angled formation and projects with its free end from the pivoting head (26).

## Revendications

1. Dispositif (10) servant à l'usinage et à la mesure de pièces à usiner pourvues de dents coupantes (5) et se présentant en particulier sous forme de cylindre ou de plaque, comprenant
- une base de machine (12),
- une unité d'usinage et de mesure (14) déplaçable par rapport à ladite base de machine (12) et
- un dispositif de positionnement de pièce à usiner (16) déplaçable par rapport à ladite base de machine (12),
ladite unité d'usinage et de mesure (14) présentant une tête pivotante (26) montée par rapport à ladite base de machine (12) de manière à pouvoir pivoter autour d'un axe de pivotement (E1) et conçue pour être équipée d'un outil d'usinage (28) et d'un palpeur de mesure (30),
**caractérisé en ce que** l'outil d'usinage (28) fait saillie d'un côté de la tête pivotante (26), le palpeur de mesure (30) fait saillie du côté opposé de la tête pivotante (26) par rapport à l'axe de pivotement (E1) et la tête pivotante (26) peut se déplacer de telle sorte par rapport à la pièce à usiner le long d'un premier axe dans l'espace (Y1), le long d'un deuxième axe dans l'espace (X1) orthogonal par rapport au premier axe et le long d'un troisième axe vertical dans l'espace (Z1) que la pièce à usiner peut, partant d'un point sommital assimilé à la position de 12 heures d'une montre et de chaque côté dudit point sommital, entrer en contact avec l'outil d'usinage (28) ou avec le palpeur de mesure (30) à l'intérieur d'un domaine angulaire respectivement compris entre 12 et 9 heures et 12 et 3 heures pour être usinée ou mesurée.

2. Dispositif (10) selon la revendication 1,
**caractérisé en ce que** l'outil d'usinage (28) et monté entraînable en rotation autour d'un axe d'entraînement (L1) sur la tête pivotante (26).

3. Dispositif (10) selon la revendication 2,
**caractérisé en ce que** l'axe d'entraînement (L1) s'étend pour l'essentiel de manière orthogonale par rapport à l'axe de pivotement (E1).

4. Dispositif (10) selon l'une des revendications précédentes,
**caractérisé en ce que** l'outil d'usinage est une électrode d'érosion (28)

5. Dispositif (10) selon la revendication 2 ou 3,
**caractérisé en ce que** l'outil d'usinage est un disque de meulage.

6. Dispositif (10) selon l'une des revendications précédentes,
**caractérisé en ce que** le palpeur de mesure (30) est réalisé sous forme de coude et est avec son extrémité libre en saillie par rapport à la tête pivotante (26).
